# DEMANDE DE BREVET EUROPEEN

(11) **EP 2 666 668 A1**
(43) Date de publication de la demande: **27.11.2013**
(21) Numéro de dépôt: 13167990.4
(22) Date de dépôt: 16.05.2013
(51) Int. Cl.: B60P 3/36, B60P 3/38

(54) **Véhicule automobile habitable comportant un lit et un bloc sanitaire agencé contre un bord avant du lit**

(30) Priorité: 24.05.2012 FR 1254780
(71) Demandeur: TrIgano s.p.a, 53037 San Gimignano (IT)
(72) Inventeur: Calderoni, Giorgio, 50125 Firenze (IT)
(74) Mandataire: Gevers France

(57) **Abrégé**

L'invention concerne un véhicule (10) automobile habitable d'orientation principale longitudinale, constitué d'un compartiment (12) avant dans lequel le poste de conduite du véhicule est agencé et d'un compartiment (14) arrière qui communique avec le premier compartiment (12), dans lequel un lit (18) est agencé longitudinalement contre une paroi (40) d'extrémité arrière et une première paroi (36) latérale du compartiment (14) arrière, et qui comporte un couloir (56) longitudinal d'accès au lit (18) agencé transversalement entre le lit (18) et la deuxième paroi (38) latérale opposée, le compartiment (14) arrière comportant un bloc (34) sanitaire,
caractérisé en ce que le bloc (34) sanitaire est agencé contre un bord (54) d'extrémité avant du lit (18).

## Description

L'invention concerne un véhicule automobile habitable comportant un lit et un bloc sanitaire.

L'invention concerne plus particulièrement un véhicule automobile d'orientation principale longitudinale, de type fourgon, aménagé pour être habitable, constitué d'un compartiment avant dans lequel le poste de conduite du véhicule est agencé et d'un compartiment arrière qui communique avec le premier compartiment, dans lequel un lit est agencé longitudinalement contre une paroi d'extrémité arrière et une première paroi latérale du compartiment arrière, et qui comporte un couloir longitudinal d'accès au lit agencé transversalement entre le lit et la deuxième paroi latérale opposée, le compartiment arrière comportant un bloc sanitaire.

Un tel véhicule est connu sous la dénomination "fourgon tôlé", ou "van" dans sa traduction anglaise, et il comporte entre autre un lit, un ensemble sanitaire, une cuisine, un coin repas et un ensemble de rangements.

Selon une disposition connue, le bloc sanitaire est agencé contre la paroi d'extrémité arrière, transversalement entre la tête du lit et la deuxième paroi latérale.

Un couloir latéral réservé entre le lit et la deuxième paroi latérale permet d'accéder au lit et au bloc sanitaire.

Néanmoins, les usagers sont contraints de se déplacer sur le lit pour pouvoir arriver jusqu'à la tête du lit car le couloir ne permet pas d'atteindre la tête de lit.

En outre, il n'est pas possible de réaliser une ouverture pour sortir ou entrer dans le véhicule dans la paroi arrière du compartiment arrière car cette dernière est entièrement occupée par le lit et par le bloc sanitaire.

De plus, s'agissant d'un fourgon utilitaire aménagé, la largeur du compartiment arrière est inférieure à celle d'un camping-car ou d'une caravane conventionnels. Le bloc sanitaire présente une dimension transversale qui ne permet pas d'agencer un lit pour deux personnes de dimension standard dans le compartiment arrière. De ce fait le lit est trop étroit pour accueillir confortablement deux personnes.

L'invention propose un nouvel agencement d'un véhicule automobile habitable tel que décrit précédemment, **caractérisé en ce que** le bloc sanitaire est agencé contre un bord d'extrémité avant du lit.

Selon d'autres caractéristiques de l'invention :
- la paroi arrière présente une ouverture arrière ;
- le couloir d'accès au lit se prolonge jusqu'à l'ouverture de la paroi d'extrémité arrière du compartiment arrière ;
- la paroi d'extrémité arrière du compartiment arrière comporte une ouverture arrière du véhicule qui est fermée par au moins une porte ;
- le bloc sanitaire est agencé contre la première paroi latérale ;
- le bloc sanitaire est interposé longitudinalement entre le lit, vers l'arrière, et une table, vers l'avant ;
- des éléments rangement sont agencés le long de la deuxième paroi latérale qui borde le couloir d'accès au lit ;
- le compartiment arrière et le compartiment avant présentent une même dimension transversale.

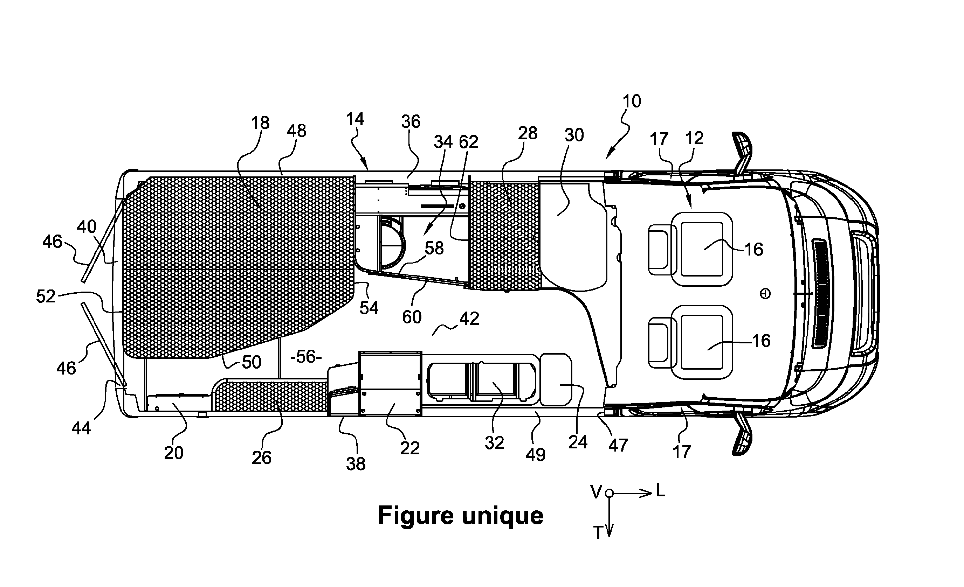

D'autres caractéristiques et avantages de l'invention apparaitront à la lecture de la description détaillée qui va suivre pour la compréhension de laquelle on se reportera à la figure unique annexée qui représente une vue de dessus avec arraché du toit du véhicule qui représente l'agencement d'un compartiment arrière réalisé selon les enseignements de l'invention.

Dans la suite de la description on adoptera les orientations suivantes :
- longitudinale qui est indiquée par la flèche "L" dirigée de l'arrière vers l'avant du véhicule selon le sens de déplacement du véhicule ;
- verticale qui est indiquée par la flèche "V" dirigée de bas en haut depuis le plancher vers le plafond du véhicule ;
- transversale qui est indiquée par la flèche "T" dirigée de gauche à droite.

Dans la suite de la description, des éléments présentant une structure identique ou des fonctions similaires seront désignés par des mêmes numéros de référence.

On a représenté à la figure un véhicule automobile 10 habitable de type camionnette utilitaire ou fourgon tôlé, aménagée pour être habitable. Un tel véhicule 10 est connu sous le terme "van" dans sa traduction anglaise.

L'espace intérieur du véhicule 10 est divisé en deux compartiments 12, 14. S'agissant d'un fourgon tôlé, le compartiment 14 arrière est enveloppé d'une carrosserie métallique qui s'étend dans le prolongement des éléments de carrosserie du compartiment 12 avant.

Le premier compartiment 12 constitue la partie l'avant du véhicule 10 et il reçoit le poste de conduite avec une rangée de sièges 16, dont le siège 16 du conducteur. On y accède par deux portières 17 latérales.

Le deuxième compartiment 14 constitue la partie arrière du véhicule 10 et il reçoit les composants permettant de vivre à l'intérieur du véhicule 10, parmi lesquels un lit 18, des éléments 20, 22, 24 de rangement, des sièges 26, 28, une table 30, un équipement 32 de cuisine, et un bloc 34 sanitaire.

Le compartiment 14 arrière est délimité transversalement entre une première paroi 36 latérale et une deuxième paroi 38 latérale opposée. Les parois 36, 38 latérale s'étendent dans un plan vertical longitudinal. Conformément aux orientations précédemment définies, la première paroi 36 latérale sera désignée par la suite "paroi 36 latérale gauche" tandis que la deuxième paroi 38 latérale sera désignée "paroi 38 latérale droite".

Le compartiment 14 arrière présente ici une largeur identique à celle du compartiment 12 avant. Les parois latérales 36, 38 du compartiment 14 arrière s'étendent longitudinalement dans le prolongement des portières 17 avant, en d'autres termes, le compartiment 14 arrière et le compartiment 12 avant présente la même largeur transversale.

Le compartiment 14 arrière est délimité longitudinalement vers l'arrière par une paroi 40 d'extrémité arrière, tandis qu'il est communique vers l'avant avec le premier compartiment 12. La paroi 40 arrière s'étend dans un plan transversal vertical.

Le compartiment 14 arrière est en outre délimité verticalement vers le bas par un plancher 42 et verticalement vers le haut par un toit (non représenté).

La paroi 40 arrière comporte une ouverture 44 arrière qui est fermée par deux portes 46 à battants qui s'ouvrent vers l'extérieur. L'ouverture 44 arrière s'étend sensiblement sur tout la paroi 40 arrière, de sorte que la paroi 40 arrière est elle-même est physiquement formée par les deux portes 46 à battant en position fermée.

La paroi 38 latérale droite comporte aussi une ouverture 47 latérale qui est fermée par une porte 49 coulissante. L'ouverture 47 débouche transversalement dans une partie avant du compartiment 14 arrière.

Ainsi il est possible d'accéder au compartiment 14 arrière en passant soit par les portières 17 avant, soit par l'ouverture 44 arrière, soit par l'ouverture latérale 47. Le lit 18 est agencé longitudinalement dans le compartiment 14 arrière, c'est-à-dire que sa plus grande dimension est orientée longitudinalement. Le lit 18 est ainsi délimité longitudinalement par un premier grand bord 48 latéral gauche et par un deuxième grand bord 50 latéral droit. Le lit 18 est aussi délimité longitudinalement par un petit bord 52 transversal arrière et par un petit bord 54 transversal avant.

Le lit 18 est un lit pour deux personnes qui mesure par exemple 190 cm dans le sens longitudinal et 140 cm dans le sens transversal. Un lit 18 de telles dimensions permet d'accueillir confortablement deux personnes.

Il s'agit ici d'un lit 18 fixe. Le lit 18 est agencé globalement à la hauteur d'une table.

Le premier bord 48 latéral gauche est agencé contre la première paroi 36 latérale gauche du compartiment 14 arrière, tandis que le bord 52 transversal arrière est agencé contre la paroi 40 arrière. Ces deux bords 48, 52 sont rectilignes de manière à épouser la forme des parois 48, 52 contre lesquelles ils sont agencés. Le lit 18 est ainsi agencé dans le coin arrière droit du compartiment 14 arrière.

Le lit 18 présente une dimension transversale qui est inférieure à la dimension transversale du compartiment 14 arrière. De ce fait, un couloir 56 longitudinal d'accès au lit est agencé transversalement entre le deuxième bord 50 latéral droit du lit 18 et la deuxième paroi 38 latérale droite opposée. Le couloir 56 d'accès au lit 18 se prolonge vers l'arrière jusqu'à la paroi d'extrémité arrière du compartiment 14 arrière. Le couloir 14 se prolonge plus particulièrement jusqu'à l'ouverture 44 arrière.

Ainsi, le lit 18 obstrue une partie gauche de l'ouverture 44 arrière, mais une partie droite de l'ouverture 44 reste accessible. Il est ainsi possible d'entrer ou sortir du compartiment 14 arrière par l'ouverture 44 arrière en empruntant le couloir 56.

Des éléments 20, 22 de rangement sont agencés le long de la deuxième paroi 38 latérale droite qui borde le couloir 56 d'accès au lit 18. Ainsi l'élément 20 de rangement, qui est transversalement peu profond, est un placard 20 bas permettant par exemple de ranger des chaussures, tandis que l'élément 22, qui est transversalement plus profond, est un placard 22 haut permettant de ranger des vêtements.

Un siège 26 est aussi agencé contre la deuxième paroi 38 latérale droite, longitudinalement entre le premier élément 20 de rangement et le deuxième élément 22 de rangement. Le siège présente une profondeur transversale intermédiaire entre celle du premier élément 20 de rangement et celle du deuxième élément 22 de rangement.

Pour permettre au couloir 56 de conserver une largeur suffisante pour qu'un usager puisse l'emprunter de face, le deuxième bord 50 latéral droit du lit présente une forme courbe vers l'avant de manière que la largeur transversale du lit 18 diminue vers l'avant.

Le bloc 34 sanitaire est agencé contre le bord 54 d'extrémité avant du lit 18. Le bloc 34 sanitaire est agencé transversalement contre la première paroi 36 latérale gauche du compartiment 14 arrière.

Le bloc 34 sanitaire comporte ici une cabine 58 fermée qui est adossée contre la première paroi 36 latérale gauche. La cabine 58 s'étend verticalement depuis le plancher 42 jusqu'au toit du véhicule 10. La cabine 58 s'ouvre latéralement en direction de la deuxième paroi 38 par l'intermédiaire d'une porte 60. La porte 60 débouche plus particulièrement en vis-à-vis du deuxième élément 22 de rangement.

La cabine 58 referme par exemple un cabinet de toilette et une douche (non représentés).

Le bloc 34 sanitaire présente une dimension transversale inférieure à celle du lit 18 de manière qu'un passage soit réservé entre le bloc 34 sanitaire et le deuxième élément 22 de rangement.

L'avant du compartiment 14 arrière est réservé au coin cuisine. Il comporte la table 30 qui est agencée contre la première paroi 36 latérale gauche. Le bloc 34 sanitaire est ainsi interposé longitudinalement entre le lit, vers l'arrière, et une table, vers l'avant.

Une banquette 28 est interposée entre le bloc 34 sanitaire et la table 30. La cloison 62 avant du bloc 34 sanitaire forme avantageusement un dossier pour la banquette 28.

Contre la deuxième paroi 38 latérale droite, transversalement en vis-à-vis de la banquette 28, est agencé un équipement 32 de cuisine qui comporte par exemple un évier et des plaques électriques. L'équipement de cuisine est agencé longitudinalement contre une face avant de l'élément 22 de rangement.

Un passage longitudinal est réservé entre l'équipement 32 de cuisine et le compartiment 12 avant de manière à permettre à un usager d'emprunter l'ouverture 47 latérale. Cependant, l'équipement 32 de cuisine est agencé contre une partie arrière de la porte 49 latérale en position fermée, ce qui réduit le passage à une portion avant de l'ouverture 47 latérale.

Un tel agencement permet au compartiment 14 arrière de recevoir un lit 18 plus large que dans un compartiment agencé selon l'état de la technique car le bloc 34 sanitaire est agencé longitudinalement en avant du lit 18.

En outre, la présence d'un couloir 56 se prolongeant jusqu'à la paroi 40 arrière permet non seulement d'accéder plus facilement au lit, mais cela permet aussi d'entrer ou de sortir du véhicule 10 par l'ouverture 44 arrière de manière aisée en marchant sur le plancher 56.

De plus, le bloc 34 sanitaire ainsi positionné longitudinalement au milieu du compartiment 34 arrière permet de séparer le coin cuisine comportant la table 30 du coin chambre comportant le lit 18. Il n'est ainsi pas nécessaire d'agencer une cloison spécialement pour séparer le coin cuisine du coin chambre.

## Revendications

1. Véhicule (10) automobile d'orientation principale longitudinale, de type fourgon, aménagé pour être habitable, constitué d'un compartiment (12) avant dans lequel le poste de conduite du véhicule est agencé et d'un compartiment (14) arrière qui communique avec le premier compartiment (12), dans lequel un lit (18) est agencé longitudinalement contre une paroi (40) d'extrémité arrière et une première paroi (36) latérale du compartiment (14) arrière, et qui comporte un couloir (56) longitudinal d'accès au lit (18) agencé transversalement entre le lit (18) et la deuxième paroi (38) latérale opposée, le compartiment (14) arrière comportant un bloc (34) sanitaire,
**caractérisé en ce que** le bloc (34) sanitaire est agencé contre un bord (54) d'extrémité avant du lit (18),
et **en ce que** la paroi (40) arrière présente une ouverture (44) arrière d'entrée ou de sortie du véhicule, le couloir (56) d'accès au lit (18) se prolongeant jusqu'à l'ouverture (44) de la paroi (40) d'extrémité arrière du compartiment (14) arrière.

2. Véhicule (10) selon la revendication précédente, **caractérisé en ce que** la paroi (40) d'extrémité arrière du compartiment arrière comporte une ouverture (40) arrière du véhicule qui est fermée par au moins une porte (46).

3. Véhicule (10) selon l'une quelconque des revendications précédentes, **caractérisé en ce que** le bloc (34) sanitaire est agencé contre la première paroi (36) latérale.

4. Véhicule (10) selon la revendication précédente, **caractérisé en ce que** le bloc (34) sanitaire est interposé longitudinalement entre le lit (18), vers l'arrière, et une table (30), vers l'avant.

5. Véhicule (10) selon l'une quelconque de revendications précédentes, **caractérisé en ce que** des éléments (20, 22) rangement sont agencés le long de la deuxième paroi (38) latérale qui borde le couloir (56) d'accès au lit (18).

6. Véhicule (10) selon l'une quelconque des revendications précédentes, **caractérisé en ce que** le compartiment (14) arrière et le compartiment avant (12) présentent une même dimension transversale.
